Europäisches Patentamt

European Patent Office

Office européen des brevets

(19)

(11) Publication number: **0 368 291**

**A1**

(12) **EUROPEAN PATENT APPLICATION**

(21) Application number: **89120724.3**

(22) Date of filing: **08.11.89**

(51) Int. Cl.⁵: **B60R 11/02**

(30) Priority: **09.11.88 FI 885161**

(43) Date of publication of application:
**16.05.90 Bulletin 90/20**

(84) Designated Contracting States:
**AT BE CH DE ES FR GB GR IT LI LU NL SE**

(71) Applicant: **NOKIA MOBILE PHONES LTD.**
**P.O. Box 86**
**SF-24101 Salo(FI)**

(72) Inventor: **Mattsson, Hannu Tapani**
**Sillanpäämpolku 3 as.4**
**SF-24130 Salo(FI)**
Inventor: **Linnoinen, Kaarle Juhani**
**Kullervontie 18**
**SF-23500 Uusikaupunki(FI)**

(74) Representative: **Fincke, Karl Theodor,**
**Dipl.-Phys.Dr. et al**
**Patentanwälte Dipl.-Ing. H.Weickmann**
**Dipl.-Phys.Dr. K.Fincke Dipl.-Ing.**
**F.A.Weickmann Dipl.-Chem. B. Huber Dr. Ing.**
**H. Liska Dipl.-Phys.Dr. J. Prechtel**
**Möhlstrasse 22**
**D-8000 München 80(DE)**

(54) **An arrangement in two-way telephone communication.**

(57) The invention relates to two-way telephone communication, especially automobile telephone communication in which listening and transmission via a microphone function continuously and simultaneously. In order to prevent the signal circulation phenomenon, the speaker (6, 6a, 6b) for reproducing the received signal is located in connection with the headrest (5) in the user's seat.

FIG. 1

EP 0 368 291 A1

## An arrangement in two-way telephone communication

The present invention relates to an arrangement for preventing the signal circulation phenomenon in two-way telephone communication, especially in automobile telephone communication, wherein listening and transmission via the microphone function continuously and simultaneously.

When, for example, a mobile telephone is used in an automobile in motion, it is recommendable for reasons of both comfort and safety that the driver can operate the telephone without using his hands, whereby his hands are freed for normal driving performance. The driver's attention is then also better focussed on road traffic.

If in an automobile a speaker is provided either in the hand piece of the telephone, or otherwise in connection with the telephone, and sufficient audio volume is provided in it, so that the driver can hear it over driving noise, a signal circulation phenomenon is automatically produced by acoustic feedback, since the sound signal from the speaker can pass into the microphone and further, via the telephone in communication with the said telephone, back to the speaker and the microphone, etc. If a separate speaker is installed in the automobile, for example in connection with the dashboard, the sound level in a driving environment must be very high, for example owing to driving noise. Respectively, the separate microphone must be sufficiently sensitive to be able to transmit the driver's speech further. In an automobile environment the problems of the circulation phenomenon are thus emphasized.

The simplest way of trying to avoid the circulation phenomenon is to provide in the steering wheel or the gearshift knob a switch by means of which the transmission is switched off for the duration of listening, and the reproducer, i.e. the speaker, is switched off for the duration of transmission. In this case, however, the telephone communication becomes one-way communication, which is clumsy and in fact regresses the technology. Furthermore, it requires the driver to use the switch during the conversation, and thus does not completely free the driver and his hands from the telephone operating functions.

Another possibility is to use a headphone-microphone combination, known from language studios, for example. It does indeed free the driver's hands if the device is worn on the head continuously, but this is inconvenient and the system has therefore not become common.

A third solution which has been proposed is the so-called hands-free equipment which comprises a hands-free unit connected to the radio unit, a separate microphone and a separate speaker.

The hands-free unit ensures that the direction of speech turns according to the active speaker at any given moment and that, for example, the above-mentioned circulation or a whine will not be produced. This is done by attenuating the signals in a suitable manner. This is, in fact, the switch system described above, but automated, in which case the two-way quality is only apparent. The system does free the driver's hands fully from operating the telephone, but on the other hand the system is expensive since it requires complicated electronics in order to accomplish satisfactory functioning. In addition, the automatic switching may take place with a slight delay, which makes communication unclear. Furthermore, various disturbance factors may lead to a situation in which the switching occurs in a wrong manner. In this case, also, the apparatus involves a certain clumsiness, the operation substantially resembling one-way telephone communication, since actual simultaneous speech is not transmitted.

The object of the invention is to provide an arrangement which makes possible simultaneously

a) truly two-way telephone communication,

b) the freeing of the driver's hands completely for other activity, for example driving the automobile,

c) insensitivity to any and all external disturbance factors, and

d) the fact that the operating is possible without any practice and does not cause any inconvenience to the user.

It is another object of the invention that the arrangement can be implemented by using simple devices without complicated electronics, and that it is reliable in operation and its price is economical.

It is a further object of the invention to provide an arrangement which can be used also in connection with radio telephones which have been taken into use previously. Also, in an accident situation the speaker unit must not decrease safety inside the automobile.

The above objects are achieved and a crucial improvement with respect to the disadvantages described above is accomplished by means of the arrangement according to the invention. To realize this, the arrangement according to the invention is characterized in what is stated in the characterizing clause of Claim 1.

The most important advantages of the invention can be deemed to be that the possibility of the circulation phenomenon is eliminated and that real two-way telephone com munication can be maintained by a simple and operationally reliable arrangement with an economical price. It is another advantage of the invention that the arrangement can also be implemented in connection with older telephone apparatus, without expensive additional devices.

The invention is described below in greater detail with reference to the accompanying figures.

Figure 1 depicts diagrammatically an arrangement according to the invention in an automobile.

Figure 2 depicts one embodiment according to the invention.

Figure 3 depicts another embodiment according to the invention.

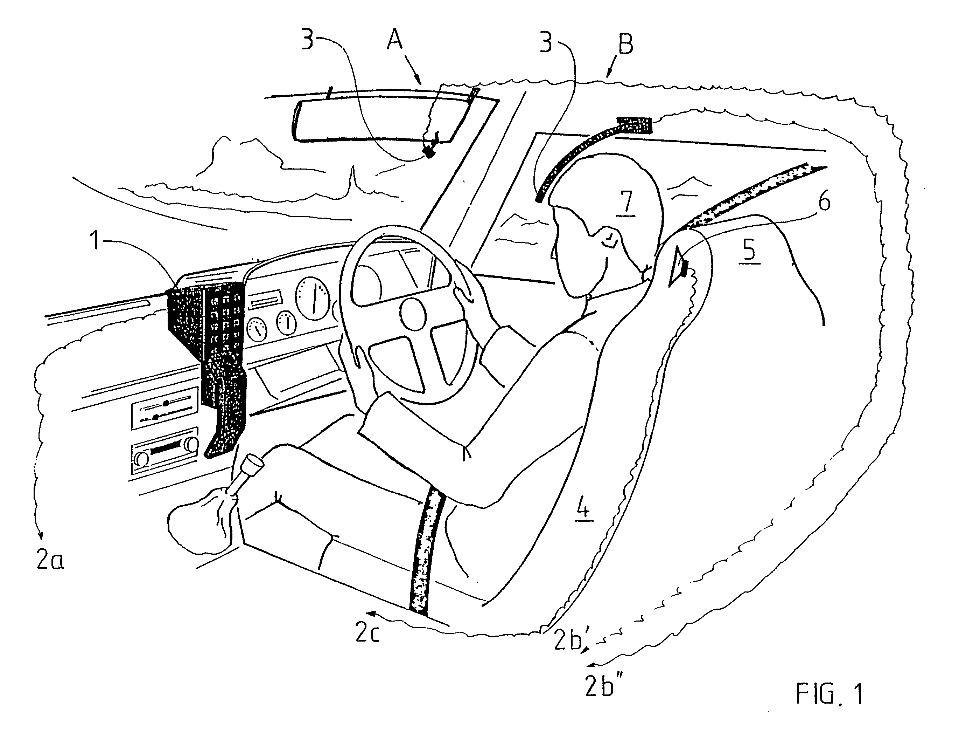

Figure 1 depicts generally an automobile telephone arrangement, wherein the control and keyboard unit 1 is normally placed in connection with the dashboard, from which there is connection wiring 2a to the actual radio unit, which is not depicted. In addition, Figure 1 depicts two different, mutually alternative locations for the microphone. In one alternative A the microphone 3 is located on the driver's sun shield, whereas in alternative B the microphone is at the end of a so-called swan's neck. These microphone placements are known, and both of them can be used in connection with the invention, as can other possible manners of placing the microphone. The connection wirings 2b' and 2b" from these microphones also lead to the non-depicted radio unit for the transmission of the speech signal.

Furthermore, in accordance with the invention a reproducing speaker 6 is provided in the headrest 5 of the driver's seat 4. The connection wiring 2c from this reproducing speaker 6 is also connected, in order to reproduce the incoming signal, to the same non-depicted radio unit as are the connection wirings 2a and 2b.

By this arrangement the speaker can be brought as close to the driver's ear 7 as is in general possible without using an actual headphone. The sound volume required in the construction according to the invention, i.e. the acoustic power leaving the speaker 6, is so low that, although the driver can hear it well because of the small distance between the speaker 6 and the ear 7, the sound does not reach either of the microphones 3 at such sound volume as to provide any circulation phenomenon. The fact that the driver can hear the sound but the sound does not substantially reach the microphones is based on the fact that sound volume decreases in inverse proportion to the square of the distance from the source of the sound. In the arrangement according to the invention, the distance to the microphones is multiple as compared with the distance to the ear 7 from the speaker 6, whereby a sufficient signal volume difference between the ear and the microphone is obtained in any situation. As a result of the arrangement according to the invention, transmission via the microphones 3 and transmission and reproduction via the speaker 6 can be continuously and simultaneously in operation during a telephone call.

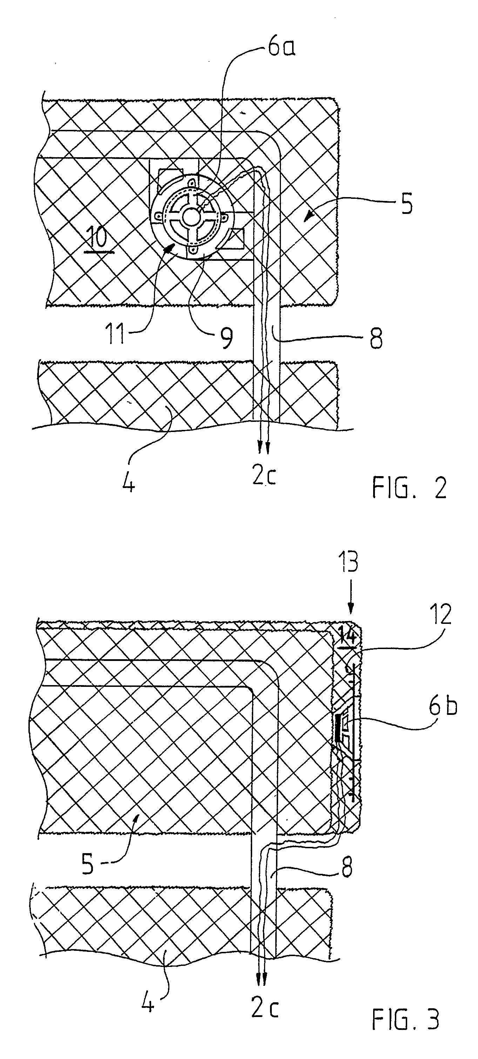

Figure 2 depicts one manner of installing a speaker 6a in the headrest 5 in the driver's seat. Fastening pieces 9 are attached to the frame tubing 8 of the headrest, for example, by welding, and the speaker 6a itself is fastened to these pieces. The speaker wiring 2c is led to the radio unit for example along the frame tube 8 of the headrest. Installation in the headrest for example in the manner presented is possible for the reason that in the case of telephone communication it is possible to use a very small speaker 6a, since the frequency range required for a speech signal is relatively narrow and, in particular, it does not extend to very low frequencies. For this reason the arrangement according to the invention is indeed not ideal for listening to music, for example; in that case different arrangements are required. At the installation point for the speaker an opening 11 the size of the speaker is made in the cushioning 10 of the headrest, but this opening does not extend all the way to the surface of the headrest, and so the outer appearance of the headrest is not in any way altered by the installation of the speaker. The detailed location and position of the speaker is, of course, dependent on the shape and construction of the headrest in the respective automobile.

The embodiment described above requires taking the arrangement into consideration already at the manufacturing stage of the automobile, and so it is applicable only to new automobiles. However, the invention can also be applied to older automobiles by using the embodiment shown in Figure 3. In this case, a hood 12 is installed over the headrest 5, the hood containing a speaker unit 6b in, for example, its end 13. The hood 12 has on one side 13 in the transverse direction of the automobile a slight thickening 14, inside which the speaker element is placed. In this case the wiring 2c must be drawn along a suitable route, for example under the seat upholstery, to the radio unit. A hood such as this hardly affects the size or outer appearance of the headrest in the seat. This is also made possible by the small size of the speaker, as above.

In all possible embodiments, the material of the thickening of the end of the headrest 5 or of the hood can, when necessary, be shaped with hollows and/or conduits in order to direct and channel to the driver's ears the signal coming from the speaker.

The invention is not limited to the examples described above; in practice the embodiments may vary greatly. Thus, for example, the speaker itself may, by its structure and operating principles, be any applicable one, and its location, position and method of installation in the headrest may be any whatsoever.

**Claims**

1. An arrangement for preventing the signal circulation phenomenon in two-way telephone communication, especially in automobile telephone communication, in which listening and transmission via a microphone function continuously and simultaneously, **characterized** in that the speaker (6, 6a, 6b) reproducing the received signal is located in connection with the headrest (5) in the user's seat and the microphone (3) in such a manner that the distance to it is multiple as compared with the distance to the ear (7) from the reproducing speaker, in order to obtain a sufficient signal volume difference between the ear and the microphone.

2. an arrangement according to Claim 1, **characterized** in that the reproducing speaker (6a) is placed inside the headrest (5) and that it is fastened to the frame structure (8) of the headrest.

3. an arrangement according to Claim 1, **characterized** in that the reproducing speaker (6b) is placed in a separate hood (12) placed over the headrest (5) in the seat.

4. An arrangement according to Claim 3, **characterized** in that the reproducing speaker (6b) is placed in the transverse direction of the seat (4) at the end (13) of the hood, and that the said end consists of a thickening (14) inside which the speaker is located.

5. An arrangement according to any of the above claims, **characterized** in that the speaker unit (6, 6a, 6b) is considerably small as compared with the dimensions of the headrest (5), that the speaker unit is entirely covered either by the upholstery of the headrest (5) or by the upholstery of the hood (12), and that hollows (11) and/or conduits are made in the cushioning and/or filler material of the headrest or the hood, for the placement of the speaker unit and for the travel sound, respectively.

6. An arrangement according to Claim 5, **characterized** in that the sound travel conduits in the headrest or the hood are arranged so as to direct sound towards the driver's ear (7) or ears.

7. An arrangement according to Claim 1, **characterized** in that the microphone (3) is placed either on the sun shield or, alternatively, at the end of a so-called swan's neck.

3  A  3  B

1

7

6

5

4

2a

2c  2b'

2b"

FIG. 1

EP 0 368 291 A1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-148714 (GUERY)<br>* page 1, line 1 - page 2, line 22; figures *<br>* page 3, line 32 - page 4, line 11 *<br>--- | 1, 7 | B60R11/02 |
| Y | PATENT ABSTRACTS OF JAPAN<br>vol. 11, no. 1 (M-550)(2448) 06 January 87,<br>& JP-A-61 181738 (TOYO COMMUN EQUIP CO LTD) 14 August 86,<br>* the whole document *<br>--- | 1, 7 | |
| A | FR-A-2295687 (BLAUPUNKT-WERKE G.M.B.H.)<br>* page 1, lines 1 - 6; figure 1 *<br>--- | 1, 2, 5, 6 | |
| A | US-A-4758047 (HENNINGTON)<br>* the whole document *<br>--- | 1, 3-5 | |
| P,A | FR-A-2620293 (CAILLEAU)<br>* claims 1-3; figures *<br>--- | 1, 2, 5, 6 | |
| A | DE-U-8611076 (ALBERT ACKERMANN G.M.B.H.)<br>* page 3, lines 1 - 24 *<br>----- | 7 | TECHNICAL FIELDS SEARCHED (Int. Cl.5 )<br><br>B60R<br>B60N<br>H04M |

The present search report has been drawn up for all claims

| Place of search | Date of completion of the search | Examiner |
|---|---|---|
| THE HAGUE | 16 FEBRUARY 1990 | DUBOIS B.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document